# EUROPEAN PATENT SPECIFICATION

(11) **EP 1 790 796 B1**
(45) Date of publication and mention of the grant of the patent: **19.10.2011**
(21) Application number: 06124555.1
(22) Date of filing: 22.11.2006
(51) Int. Cl.: E04F 15/024, G09F 19/22

(54) **System for signalling and/or decorative lighting on technical floors**
System zur Signalisierung und/oder dekorativen Beleuchtung auf Hohlböden
Système de signalisation et/ou éclairage décoratif sur des sols techniques

(30) Priority: 23.11.2005 ES 200502881
(43) Date of publication of application: 30.05.2007
(73) Proprietor: Floria Arriazu, Miguel Angel, 50003 Zaragoza (ES)
(72) Inventor: Floria Arriazu, Miguel Angel, 50003 Zaragoza (ES)
(74) Representative: Pons Ariño, Angel

(56) References cited:
- EP-A- 0 323 682
- WO-A-01/21909
- DE-U1-202004 003 188
- US-A1- 2004 240 230

## Description

### OBJECT OF THE INVENTION

The present invention refers to a system for signalling and/or decorative lighting on technical floors.

### BACKGROUND OF THE INVENTION

Technical floors made up of several legs adjustable in height are familiar with, connected by girders forming a horizontal, networked structure, upon which plates are supported to create the floor, normally made of aggregate covered by a tile of different materials.

The floor stays perfectly levelled thanks to the regulation in height of the legs. On some of these floors, the girders have a wing that juts out lengthways above between the plates, which makes a small separation equal to the wing thickness.

These plates, and the structure in general, are raised with regard to the base or real floor, permitting the installation of wiring or other fittings between them, that are easily accessible by raising the plates that make the technical floor.

On the other hand, in many obligatory cases, the use of various signalling means in public or private buildings to indicate, for example, emergency escape routes (fire, blackout, etc.), are known.

For obvious reasons of difficulty in carrying out wiring and protection of lamps, light signalling is normally fitted in high places where it also seems to be more visible.

However, this is not the case in certain conditions, as, for example, in fires where the smoke tends to go upwards and may hide or hinder one from seeing these luminous signals placed above.

There also exist transparent or translucent floor plates, or plates having transparent or translucent sections, provided with light emitting means for illuminating through the plates themselves, such as those described in WO01/21909 and US 2004/0240230.

These inconveniences are overcome by the use of the system referred to in this invention.

### DESCRIPTION OF THE INVENTION

The system referred to in the invention installs luminous signalling on technical floors in the best possible way, extremely useful, for example, to signal emergency escape routes or nocturnal lighting, to indicate emergency exits, or to provide information regarding conditions of luminous tonality or flashing changes, and useful in a great variety of information-providing applications. Besides, it is also useful in fulfilling an aesthetic function.

According to the invention, the system comprises a number of luminous or luminescent elements fitted inside gaps provided in the technical floor, suitably protected so that their illumination is visible, in order to, for example, be used as emergency signalling or decorative lighting.

The gaps where the luminous or luminescent elements are housed may be fitted into the plates forming the technical floor themselves or, preferably, in gaps arranged between adjacent plates, for example, by means of separators, chamfers, etc. In addition, they will be ideally included in the legs of the network structure, since the implementation of specific supports is avoided in this way.

Luminous or luminescent elements of different shapes and colours may be used in adapting them to the gaps or to improve their visualization or aesthetics. To the latter end, the use of luminous diffusers might also be interesting. Therefore, the luminous or luminescent elements, or the diffusers, may have, for example, a cross, diamond or round shape, etc.

Ideally, one or more LED diodes shall be used, powered by the corresponding wiring, and preferably from a safe power source that enables its functioning even in the case of normal electrical power supply failure.

The wiring is to be preferably undertaken in a such way as to allow the power supply of sets of diodes selectively or individually, to indicate routes, establish effects selectively with information-providing purposes, etc.

On the luminous or luminescent elements lighting up, luminous signalling is established at the corners of the floor-creating plates - signalling that is easily perceptible to the user.

### BRIEF DESCRIPTION OF THE DRAWINGS

Figure 1 shows a view of a section of technical floor that incorporates the system in the invention.
Figure 2 shows a detailed view of a technical floor's adjustable leg, where the elements fitted into it according to the invention are displayed.
Figure 3 shows an embodiment variation of the system referred to in the invention, with a luminous diffuser.

### DESCRIPTION OF A PRACTICAL EMBODIMENT OF THE INVENTION

The system in the invention comprises a number of luminous diffusers 1 with transparency index between 72 and 89%, which have an cross-shape to be inserted into the space in such a way as to define other height-adjustable legs 2 that form part of the structure of the technical floor. In this embodiment example, restrictive in no case, the structure's girders 3 are joined to the legs by means of nipples 4 with a head 5 that is inserted through a slot 6 with reduced edges of the leg, that has a setscrew 8 tightening area 7 for each girder.

Since the girders have an upper wing 9 that makes a separation between the floor-creating plates 9a, wings that do not continue over the legs, it is precisely in this area where the diffusers are to be fitted, providing continuity in turn to the surface area of the floor. In turn, each plate 9a is made up of a base 9b of high-density agglomerate to which a tile 9c is mechanically fixed or by means of adhesive.

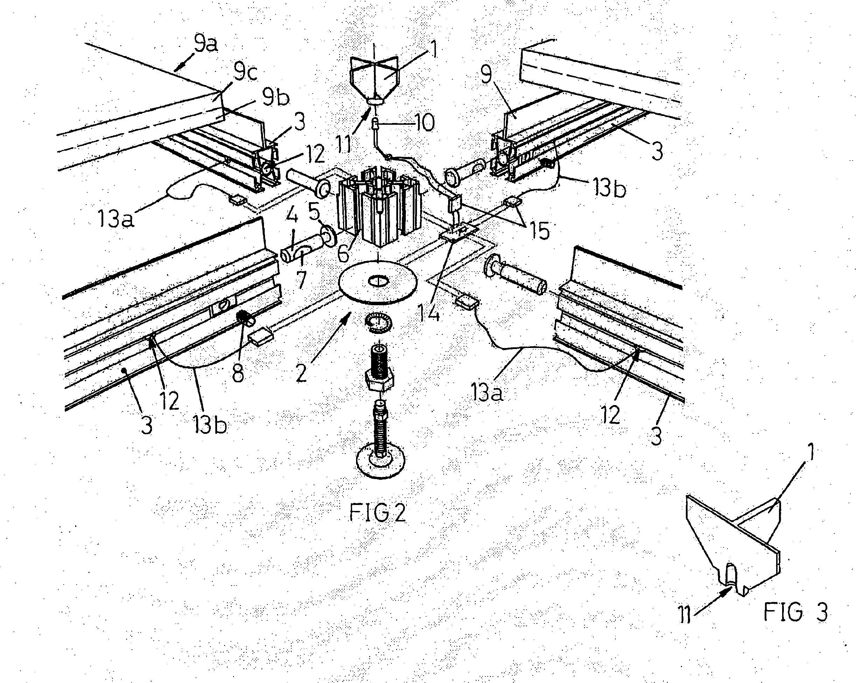

In a variation of the invention, it has been considered that the diffuser has a T-shape, as shown in figure 3, to be inserted into the legs the technical floor may have around its perimeter, for example adjacent to walls or other floors.

The diffuser is to be ideally embodied with high transparency material but tinting its upper faces to increase its visualization through illumination, not through light dispersion.

Under each diffuser is a luminous or luminescent element, an LED 10 in this example, which is inserted into a cavity 11 of the diffuser itself. This could be a single or multicoloured LED.

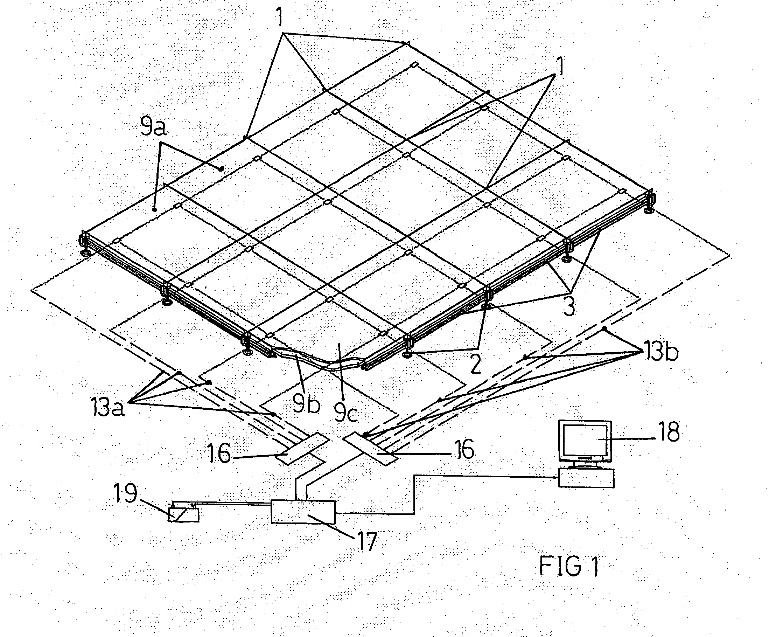

Several ducts 12 intended to house the wiring that is going to feed the diodes have been fitted to the girders 3. The wiring is constructed in the way of a matrix, by rows 13a and columns 13b, as may be seen in figure 1, which allows the selective or individual illumination of sets of diodes. For the individual connection of each diode, a tapping plate 14 has been provided on each leg that will also provide continuity for the cable buses that converge there, the different connections with the plate being carried out through the corresponding connectors.

In the same way, according to the invention, it is possible to carry out the wiring for buses, instead of through physical wires, through the sections of the reticulated network itself, given its metallic nature, with the obvious implementation of isolation at the crossing points, that is to say, at the adjustable legs, as well as the connections that give continuity to the buses and branch towards the diodes or luminous elements being used.

The cable buses arranged in rows and columns are each independently connected to distribution frames 16, and these in turn to a control processing board 17 that precisely controls switching on and off, as well as the brightness and intensity of all the diodes comprising the installation, and, in installations with bicoloured LED, the resultant colour. The processing board has a module processed for the generation of luminous effects and the creation of ways for signalling using control software. The configuration of this control board includes connection to an external computer.

Given that the system in the invention may be preferably used for emergency signalling, it has been established that the power supply 19 of the diodes comes from a safe source, which is also responsible for supplying electric power to the control board. Thus it is possible to configure automatic operation input in case of emergency, even in the case of electrical power failure.

Having sufficiently described the nature of the invention, as well as the way to embody it in practice, it must be emphasized that the previously indicated layouts, represented in the attached drawings, may be modified in detail as long as they do not alter the fundamental principle.

## Claims

1. System for signalling and/or decorative lighting on technical floors, the floors comprising a number of height-adjustable legs (2) connected by means of girders (3) forming a horizontal networked structure, a number of floor-creating plates (9a) being set on the networked structure such that the legs (2) are located at the corners of the plates (9a); the system comprising a number of luminous or luminescent elements (10), **characterized in that** the luminous or luminescent elements (10) are arranged in the legs (2) for illuminating through corner gaps between the plates (9a).

2. System according to claim 1, further comprising luminous diffusers (1) arranged flush at the corner gaps between the plates (9a) for diffusing the light emitted by the luminous or luminescent elements (10) located below them.

3. System according to claim 2, wherein the diffusers (1) comprise a dedicated cavity (11) for housing the luminous or luminescent elements (10).

4. System according to claim 3, wherein the diffusers (1) are cross-shaped, being fitted in the gap between four plates(9a) adjacent to a leg (2) in a non-perimeter zone of the technical floor.

5. System according to claim 3, wherein the diffusers (1) are T-shaped, being fitted in the gap between two plates (9a) adjacent to a leg(2) in a perimeter zone of the technical floor.

6. System according to any of the previous claims, wherein the luminescent element (10) is a LED.

7. System according to any of the previous claims, wherein a power-supply wiring of the luminous or luminescent elements (10) is arranged in rows (13a) and columns (13b), comprising cable buses that independently feed each row (13a) and column (13b), and the column buses (13b) being interconnected on one side and the row buses (13a) on the other, each to distribution frames (16) connected to a processing board (17) that controls the selective switching on/off of the luminous or luminescent elements (10) and their colour and brightness.

8. System according to claim 7, wherein the processing board (17) comprises a module for the generation of luminous effects and the creation of ways for signalling using control software, the processing board (17) being connected to a computer (18) for configuration.

9. System according to any of claims 7 or 8, wherein the girders (3) comprise ducts (12) for housing the wiring.

## Patentansprüche

1. Ein System zur Signalisierung und/oder dekorativen Beleuchtung von technischen Fußböden, wobei die Fußböden eine Anzahl von höhenverstellbaren Standbeinen (2) umfassen, die mittels Trägern (3) verbunden sind, die eine netzartige horizontale Struktur bilden, wobei eine Anzahl von den Boden bildenden Platten (9a) derart auf die netzartige Struktur gesetzt werden, dass die Standbeine (2) sich an den Ecken der Platten (9a) befinden; wobei das System eine Reihe von strahlenden oder leuchtenden Elementen (10) umfasst, **dadurch gekennzeichnet, dass** die strahlenden oder leuchtenden Elemente (10) in den Standbeinen (2) angeordnet sind, um durch Ecklücken zwischen den Platten (9a) zu leuchten.

2. Ein System nach Anspruch 1, welches weiterhin leuchtende Diffusoren (1) umfasst, die bündig an den Ecklücken zwischen den Platten (9a) angeordnet sind, um das von den unter diesen befindlichen strahlenden oder leuchtenden Elementen (10) ausgestrahlte Licht zu zerstreuen.

3. System nach Anspruch 2, bei dem die Diffusoren (1) einen dedizierten Hohlraum (11) zur Aufnahme der strahlenden oder leuchtenden Elemente (10) umfassen.

4. System nach Anspruch 3, bei dem die Diffusoren (1) kreuzförmig sind und in einem Bereich ungleich des Umfangs des technischen Fußbodens angrenzend an ein Standbein (2) in die Lücke zwischen vier Platten (9a) eingepasst sind.

5. System nach Anspruch 3, bei dem die Diffusoren (1) T-förmig sind und in einem Umfangsbereich des technischen Fußbodens angrenzend an ein Standbein (2) in die Lücke zwischen zwei Platten (9a) eingepasst sind.

6. System nach irgendeinem der vorherigen Ansprüche, bei dem das leuchtende Element (10) ein LED ist.

7. System nach irgendeinem der vorherigen Ansprüche, bei dem eine Verkabelung zur Stromversorgung der strahlenden oder leuchtenden Elemente (10) in Reihen (13a) und Spalten (13b) angeordnet ist, die Sammelschienen umfasst, welche jede Reihe (13a) und jede Spalte (13b) unabhängig versorgen, wobei die Spalten-Sammelschienen (13b) auf der einer Seite und die Reihen-Sammelschienen (13a) auf der anderen Seite jeweils mit Verteilerrahmen (16) verbunden sind, die mit einer Verarbeitungstafel (17) verbunden sind, welche die selektive Ein- und Ausschaltung der strahlenden oder leuchtenden Elemente (10) sowie deren Farbe und Helligkeit steuert.

8. System nach Anspruch 7, bei dem die Verarbeitungstafel (17) ein Modul zur Erzeugung von Leuchteffekten und zur Schaffung von Wegen zur Signalisierung unter Verwendung einer Steuersoftware umfasst, wobei die Steuertafel (17) zur Konfiguration an einen Computer (18) angeschlossen ist.

9. System nach Anspruch 7 oder 8, bei dem die Träger (3) Kanäle (12) zur Aufnahme der Verkabelung umfassen.

## Revendications

1. Système pour éclairage de signalisation et/ou décoratif sur planchers techniques, les planchers comprenant un certain nombre de pattes à hauteur réglable (2) reliées au moyen de poutrelles (3) formant une structure quadrillée horizontale, un certain nombre de plaques (9a) qui constituent le plancher étant placées sur la structure quadrillée de façon à ce que les pattes (2) soient situées aux angles des plaques (9a) ; le système comprenant un certain nombre d'éléments lumineux ou luminescents (10), **caractérisé en ce que** les éléments lumineux ou luminescents (10) sont disposés dans les pattes (2) pour illuminer à travers les intervalles des angles entre les plaques (9a).

2. Système selon la revendication 1, comprenant en outre des diffuseurs lumineux (1) disposés au même niveau aux intervalles des angles entre les plaques (9a) pour diffuser la lumière émise par les éléments lumineux ou luminescents (10) situés en dessous d'elles.

3. Système selon la revendication 2, dans lequel les diffuseurs (1) comprennent une cavité (11) destinée à loger les éléments lumineux ou luminescents (10).

4. Système selon la revendication 3, dans lequel les diffuseurs (1) sont en forme de croix, étant encastrés dans l'intervalle entre quatre plaques (9a) adjacentes à une patte (2) dans une zone non périphérique du plancher technique.

5. Système selon la revendication 3, dans lequel les diffuseurs (1) sont en forme de T, étant encastrés dans l'intervalle entre deux plaques (9a) adjacentes à une patte (2) dans une zone périphérique du plancher technique.

6. Système selon n'importe laquelle des revendications précédentes, dans lequel l'élément luminescent (10) est une DEL.

7. Système selon n'importe laquelle des revendications précédentes, dans lequel des câbles électriques d'alimentation des éléments lumineux ou luminescents (10) sont disposés en rangées (13a) et colonnes (13b), comprenant des bus de câbles qui alimentent de manière indépendante chaque rangée (13a) et colonne (13b), et les bus de colonne (13b) étant interconnectés sur un côté et les bus de rangée (13a) sur l'autre, chacun à des cadres de distribution (16) connectés à une carte processeur (17) qui commande la sélection de mise sous tension/mise hors tension des éléments lumineux ou luminescents (10) et leur couleur et brillance.

8. Système selon la revendication 7, dans lequel la carte processeur (17) comprend un module pour la génération d'effets lumineux et la création de modes de signalisation utilisant un logiciel de commande, la carte processeur (17) étant reliée à un ordinateur (18) pour la configuration.

9. Système selon n'importe laquelle des revendications 7 ou 8, dans lequel les poutrelles (3) comprennent des conduits (12) pour loger les câbles électriques.
